(19) **Europäisches Patentamt**
**European Patent Office**
**Office européen des brevets**

(11) **EP 4 143 635 B1**

(12) # EUROPÄISCHE PATENTSCHRIFT

(45) Veröffentlichungstag und Bekanntmachung des Hinweises auf die Patenterteilung:
**25.09.2024 Patentblatt 2024/39**

(21) Anmeldenummer: **21736957.8**

(22) Anmeldetag: **28.04.2021**

(51) Internationale Patentklassifikation (IPC):
**G02F 1/21** (2006.01) **G02F 1/225** (2006.01)

(52) Gemeinsame Patentklassifikation (CPC):
**G02F 1/353; G02F 1/355; G02F 1/3551**

(86) Internationale Anmeldenummer:
**PCT/DE2021/100383**

(87) Internationale Veröffentlichungsnummer:
**WO 2021/219168 (04.11.2021 Gazette 2021/44)**

(54) **ANORDNUNG UND VERFAHREN ZUR EFFIZIENTEN NICHTLINEAREN LICHTKONVERSION**

ARRANGEMENT AND METHOD FOR EFFICIENT NON-LINEAR LIGHT CONVERSION

DISPOSITIF ET PROCÉDÉ DE CONVERSION DE LUMIÈRE NON LINÉAIRE EFFICACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2020 DE 102020002708**
**16.07.2020 DE 102020118780**

(43) Veröffentlichungstag der Anmeldung:
**08.03.2023 Patentblatt 2023/10**

(73) Patentinhaber:
• **Friedrich-Schiller-Universität Jena**
**07743 Jena (DE)**
• **Fraunhofer-Gesellschaft zur Förderung der angewandten Forschung e.V.**
**80686 München (DE)**

(72) Erfinder:
• **EILENBERGER, Falk**
**07745 Jena (DE)**
• **TURCHANIN, Andrey**
**07747 Jena (DE)**
• **GEORGE, Antony**
**07743 Jena (DE)**
• **SCHMIDT, Markus**
**07743 Jena (DE)**

(74) Vertreter: **Donath, Dirk**
**Patent- und Rechtsanwaltskanzlei**
**Bock Bieber Donath Partnerschaftsgesellschaft**
**Humboldtstraße 18**
**07743 Jena (DE)**

(56) Entgegenhaltungen:
**US-A1- 2020 057 354**

• **LEWIS A ET AL: "Composite material hollow core fibers: functionalisation with silicon and 2D materials", PROCEEDINGS OF SPIE; [PROCEEDINGS OF SPIE ISSN 0277-786X VOLUME 10524], SPIE, US, vol. 10535, 23 February 2018 (2018-02-23), pages 105350N - 105350N, XP060103399, ISBN: 978-1-5106-1533-5, DOI: 10.1117/12.2289785**
• **DE LUCIA F ET AL: "Enhancing the nonlinear functionality of step-index silica fibers through the combination of thermal poling and 2D materials", SPIE PROCEEDINGS; [PROCEEDINGS OF SPIE ISSN 0277-786X], SPIE, US, vol. 11282, 18 February 2020 (2020-02-18), pages 1128212 - 1128212, XP060129929, ISBN: 978-1-5106-3673-6, DOI: 10.1117/12.2544140**
• **BLAUTH M ET AL: "Ultra-compact photodetection in atomically thin MoSe_2", ARXIV.ORG, CORNELL UNIVERSITY LIBRARY, 201 OLIN LIBRARY CORNELL UNIVERSITY ITHACA, NY 14853, 16 May 2019 (2019-05-16), XP081470790, DOI: 10.1021/ACSPHOTONICS.9B00785**

**Beschreibung**

Die Erfindung betrifft eine Anordnung und ein Verfahren zur effizienten nichtlinearen Lichtkonversion gemäß der Gattung der Patentansprüche.

Die nichtlineare Lichtkonversion ist eine etablierte Methode zur Generation von Licht mit besonderen Eigenschaften in entsprechenden Lichtquellen. Ganz allgemein sind dabei drei Aspekte für die Wirksamkeit und die Anwendbarkeit nichtlinearer Lichtkonverter wesentlich:

1. die lokale Konversionsrate, welche durch die Stärke der nichtlinearen Polarisation für ein gegebenes elektromagnetisches Feld für ein bestimmtes Material gegeben ist,

2. die Interaktionsskala, welche durch Interaktionslänge, Interaktionsquerschnitt, sowie die Leistungsbeständigkeit der Konversionsstruktur bestimmt wird, und

3. die dispersiven Eigenschaften (definiert, inwiefern eine lokal effiziente Konversion in einem System makroskopisch genutzt werden können).

Während der 1. Aspekt direkt vom verwendeten Material abhängt, hängen der 2. und der 3. Aspekt sowohl vom Material als auch von dessen Geometrie ab. Der 1. Aspekt kann insbesondere in wellenleitenden Strukturen durch Nanostrukturierung kontrolliert werden.

Die Wirksamkeit und Anwendbarkeit nichtlinearer Wellenleiter bedingt also günstige nichtlineare Materialparameter sowie die Fähigkeit nanostrukturierte Komponenten mit hoher Güte nutzen zu können.

Für Lichtquellen mit Wellenlängen, für die keine oder keine gleichwertigen Laserlichtquellen verfügbar sind, also vor allem im Bereich des ultravioletten und des nah- sowie ferninfraroten Lichts sowie für ultrakurze Laserpulse in einem breiteren Spektralbereich werden meist Lichtkonverter auf Basis der Dreiwellenmischung eingesetzt.

In diesem Bereich kommen vor allem freiraumoptische Systeme mit speziellen nichtlinearen Kristallen vor.

Freiraumoptische Systeme sind prinzipiell in allen drei oben genannten Aspekten beschränkt. Geführt optische Systeme aus kristallinen nichtlinearen Medien, kommen vor allem in Resonatorgeometrien zum Einsatz (sogenannte OPOs). Im Vergleich zu freiraumoptischen Systemen ergeben sich Verbessungen im 2. und 3. Aspekt, wobei die gezielte Modifikation dispersiver Eigenschaften vermittels Nanostrukturierung in nichtlinearen Kristallen deutlich weniger ausgeprägt ist, als in linearen Medien und oft zu Lasten des 2. Aspektes geht.

Optische Systeme in räumlichem Kontakt mit nichtlinearen Volumenmedien beziehen sich auf die Vierwellenmischung. Dabei gibt es große Einschränkungen in den Bereichen des 1. Aspektes (geringe nichtlineare Konversion, beispielsweise in Gasen) sowie des 3. Aspektes (starke Beeinflussung der dispersiven Eigenschaften der Wellenleiter durch ungünstige lineare Eigenschaften der nichtlinearen Materialien).

Lichtquellen für stochastisch erzeugte Photonenpaare mit definierter Quantenkorrelation werden im Allgemeinen von den oben genannten Wellenlängenkonvertern abgeleitet, wobei hier meistens Dreiwellenmischprozesse in kristallinen Medien zur Anwendung kommen.

Durch die Nutzung klassischer Volumenkristalle ist dabei der 1. Aspekt gering ausgeprägt.

Die Einstellung bestimmter Korrelationseigenschaften erfolgt durch das Design dispersiver Eigenschaften (3.Aspekt).

In freiraumbasierten Systemen ist dabei die Konversionseffizienz (1. Aspekt) und die Freiheitsgrade der Dispersionskontrolle stark eingeschränkt (3. Aspekt).

In wellenleiterbasierten Systemen sind einige Einschränkungen reduziert, jedoch beschränkt die Dispersionkontrolle (3. Aspekt) vermittels Nanostrukturierung des Kristalls oftmals die Interaktionsskala (2. Aspekt).

Räumlich kohärente Weißlichtquellen basieren auf dem Effekt der Superkontiuumsgeneration und nutzen im Allgemeinen einen Vierwellenmischung in Wellenleitern, was zu einem wesentlichen Beitrag für den 2. und 3. Aspekt führt.

Durch gezielte Steuerung des dispersiven Verhaltens können vorteilhafte Weißlichteigenschaften hervorgerufen werden. Eine entsprechende Kontrolle setzt im Allgemeinen eine Nanostrukturierung der Faser- oder des Wellenleiters voraus. Häufig ist das nur in Glas möglich.

Da Gläser eine sehr geringe lokale Konversion (1. Aspekt) aufweisen, bedeutet das, dass Weißlichtquellen oft mit großer Pumpleistung betrieben werden müssen.

Die Nutzung stark nichtlinearer Medien zur Verbesserung des 1. Aspekts, beispielsweise in infiltrierten optischen Fasern, hat negative Auswirkungen auf den 3. Aspekt und ist aus praktischen Gründen (Abschluss von Flüssigkeiten und Gasen, Toxizität) nicht anwendungsbezogen umsetzbar.

Im Allgemeinen besteht also die Schwierigkeit, alle drei Aspekte für ein gegebenes Material gleichzeitig zu erfüllen.

Materialien mit starker nichtlinearer Wechselwirkung erfüllen im Allgemeinen nur den 1. Aspekt wirklich gut.

Fasern und Wellenleiter aus nicht oder nur schwach nichtlinearen Materialien erfüllen den 2. und 3. Aspekt leicht.

Material und Geometrie der Fasern und Wellenleiter kann so gewählt werden, dass die Interaktionslänge und Interaktionsquerschnitt sowie dispersive Eigenschaften der Mode optimiert werden.

Die Licht-Materie-Wechselwirkungslänge in Übergangsmetalldichalcogniden (TMDC), insbesondere in Monolagen- TMDC, auf planaren Substraten ist auf Grund ihrer winzigen Dicke auf den Subnanometerbereich beschränkt.

Diese Einschränkung reduziert die gesamte optische Antwort der TMDCs und schränkt mögliche Anwendungen stark ein.

Daher sind Strategien, die die Wechselwirkung zwischen Licht und Material verbessern, sehr wichtig. Die Kopplung der TMDCs mit verschiedenen Arten von optischen Resonatoren ist eine weit verbreitete Methode, um die Licht-Materie-Interaktion zu verbessern.

Dies ist jedoch auf Schmalbandresonanzen beschränkt, während Breitband- und ultraschneller Betrieb so nicht umgesetzt werden können.

Andererseits kann durch die Integration von TMDCs auf Wellenleitern oder Glasfasern die Interaktionslänge breitbandig und nichtresonant vergrößert werden. Die resultierenden 2D-funktionalisierten Wellenleiter (2DFWG) können die optischen Eigenschaften von TMDCs durch Interaktion mit Teilen der evaneszenten Felder der geführten Moden nutzen. 2DFWGs können bemerkenswerte Eigenschaften aufweisen, indem sie bspw. die nichtlinearen oder exzitonischen Eigenschaften der TMDs nutzen. Frühere Versuche, 2DFWG herzustellen, basieren auf der mechanischen Übertragung von exfolitierten TMDCs auf die Wellenleiter oder Glasfasern.

Dieser Ansatz ist jedoch anfällig für unkontrollierbare Spannungsfelder und ist nicht reproduzierbar und skalierbar. Daher sind solche Methoden für die zukünftige großflächige Integration kaum geeignet.

Es ist bekannt, dass TMDCs (= Übergangsmetalldichalcognide), d.h. Verbindungen aus einem Übergangsmetall (z.B. Molybdän, oder Wolfram) und zwei Chalkogenbestandteilen (z. B. Schwefel, Selen oder Tellur), mit einer Dicke von nur einer kristallinen Einheitszelle ganz allgemein eine ungewöhnlich starke Wechselwirkung mit Licht und elektronischen Signalen zeigen.

Insbesondere zeigen sie einen sehr starken Zusammenhang zwischen elektrischem Feld und elektrischer Polarisation sowohl für die Dreiwellenmischung, als auch für die Vierwellenmischung. Dabei werden häufig verwendete Materialien um viele Größenordnungen übertroffen (Dreiwellenmischung: ca. $10^4$ BBO; Vierwellenmischung: ca. $10^7 \times$ $SiO_2$). Sie sind also, auch bei einem nur geringen Überlapp zwischen Mode und Material hervorragend geeignet, um den 1. Aspekt zu erfüllen. Eine einzelne Atomlage führt zu keiner wesentlichen linearen Beeinflussung der Propagation von Licht im Transparenzbereich.

Als reines Material sind sie jedoch völlig ungeeignet in für den 2. und 3. Aspekt. Die Interaktionslänge ist auf eine Atomlage beschränkt, eine Dispersionskontrolle ist im Wesentlichen nicht möglich.

TMDCs werden nach derzeitigem Stand der Technik auf Substrate transferiert oder direkt gewachsen. Beim Transfer werden Bruchstücke einer Monolagenschicht mittels eines Stempels mit definierter Adhäsion auf ein Substrat übertragen [K. F. Mak, C. Lee, J. Hone, J. Shan, and T. F. Heinz, Atomically Thin mos2: A New Direct-Gap Semiconductor, Phys. Rev. Lett. 105, 136805 (2010)]. Dieses Verfahren ist auch planare Substrate beschränkt und damit für Fasern [Y.-W. Song, S.-Y. Jang, W.-S. Han, and M.-K. Bae, Graphene mode-lockers for fiber lasers functioned with evanescent field interaction, Applied Physics Letters 96, 051122 (2010)] und Wellenleiter nur bedingt geeignet. Darüber hinaus ist es wenig reproduzierbar.

Das Wachstum von TMDCs basiert i.A. aus der Gasphase vermittels chemischer Gasphasenabscheidung [A. George, C. Neumann, D. Kaiser, R. Mupparapu, T. Lenert, U. Huebner, Z. Tang, A. Winter, U. Kaiser, I. Staude and A. Turchanin, Controlled growth of transition metal dichalcogenide monolayers using knudsen-type effusion cells for the precursors, Journal of Physics: Materials (2018)] oder Atomlagenabscheidung [L. K. Tan, B. Liu, J. H. Teng, S. Guo, H. Y. Low, and K. P. Loh, Atomic layer deposition of a mos2 film, Nanoscale 6, 10584-10588 (2014)].

Beide Verfahren sind konformal, d.h. sie sind für gekrümmte, strukturierte und nichtplanare Substrate und Wellenleiterstrukturen geeignet.

George, C. Neumann, D. Kaiser, R. Mupparapu, T. Lenert, U. Huebner, Z. Tang, A. Winter, U. Kaiser, I. Staude A. Turchanin, Controlled growth of transition metal dichalcogenide monolayers using knudsen-type effusion cells for the precursors, Journal of Physics: Materials (2018)] offenbart konkret ein Verfahren zur Herstellung von TMDC-Monolagen. Diese Schrift lehrt dabei in keiner Form die Anwendung der erzeugten Monolagen und geht explizit nur auf die Abscheidung auf planaren Substraten ein.

L. K. Tan, B. Liu, J. H. Teng, S. Guo, H. Y. Low, and K. P. Loh, Atomic layer deposition of a MoS2 film, Nanoscale 6, 10584-10588 (2014)". Offenbart konkret ein Verfahren zur Herstellung von TMDC-Monolagen offenbart dabei in keiner Form eine Anwendung der erzeugten Monolagen und geht explizit nur auf die Abscheidung auf planaren Substraten ein.

Gasphasenbasiertes Wachstum kann dabei auf der Oberfläche eines Mediums erfolgen oder aber auf der Innenseite eines Hohlraums des Mediums, insofern diese Innenfläche für das Prozessgas zugänglich ist. Da die Prozesse im Allgemeinen bei hoher Temperatur ablaufen, gelten bestimmte Einschränkungen an Substratmaterialien.

Aus der Publikation LEWIS A ET AL, "Composite material hollow core fibers: functionalisation with silicon and 2D materials", PROCEEDINGS OF SPIE; [PROCEEDINGS OF SPIE ISSN 0277-786X VOLUME 10524], SPIE, US, Band 10535, 23. Februar 2018 (2018-02-23), Seite 105350N-105350N ist bekannt, dass nantiresonante Hohlkernfasern die Führung von Licht im mittleren Infrarotbereich bei geringer Dämpfung ermöglichen und für eine Vielzahl von Anwendungen eingesetzt werden können, bspw. für die Übertragung von Hochleistungslasern und die Gassensorik, wobei in jüngster Zeit Silizium in solche Fasern integriert wurde, so dass die linearen Verluste etwa nur 0,1 dB/m betragen.

Diese Schrift offenbart dabei, dass Aufgrund der Änderung des Brechungsindexunterschieds von Silizium, bspw. durch den Dispersionseffekt von freien Ladungsträgern im Plasma, ein rein optischer Modulator mit einer solchen Faser ermöglicht werden soll. Die genannte Publikation lehrt dazu die Integration funktioneller Materialien in Hohlfasern durch die Abscheidung des TMD-Halbleitermaterials $MoS_2$ in Form von wenigen Schichten, durch die Verwendung eines flüssigen Vorläufers, so dass ein hochwertiger $MoS_2$-Film in Form einiger Schichten über eine Faserlänge von 30 cm abgeschieden werden, was durch Raman-Spektroskopie bestätigt wurde. Aus dieser Publikation ist darüber hinaus bekannt, dass dieses Verbundmaterial aus Hohlfaser und wenigen, aus flüssigen Vorläufern abgeschiedenen $MoS_2$-Schichten bei der Aufnahme von Transmissionsspektren zu einen zusätzlichen Verlust von etwa 5 dB/m führen, obwohl dieses nur etwa 2 nm Verbundmaterial dick ist, was darauf hin deutet, dass der Brechungsindex des integrierten Materials potenziell in der Lage ist, die Leiteigenschaften der Faserprobe zu verändern.

Der Nachteil dieser technischen Lösung besteht darin, dass die eingesetzten flüssigen Präkursoren den entscheidenden Nachteil haben, dass eine Dosierung der Vorläufermaterialien durch die Kapillarkäfte bestimmt wird. Damit hängt die Dosierung von der lokalen Geometrie ab und ist nicht prozessseitig einstellbar.

Die Publikation DE LUCIA F ET AL, "Enhancing the nonlinear functionality of step-index silica fibers through the combination of thermal poling and 2D materials", SPIE PROCEEDINGS; [PROCEEDINGS OF SPIE ISSN 0277-786X], SPIE, US,Band 11282, 18. Februar 2020 (2020-02-18), Seite 1128212-1128212 offenbart die Verbesserung der "Induktionspolungstechnik " unter Verwendung von Flüssigelektroden, die die thermische Polung von optischen Siliziumdioxidfasern beliebiger Länge und Geometrie ermöglichen, wobei die nichtlinearen Effekte des thermischen Polungsprozesses weiter verbessern werden sollen.

Gemäß dieser Offenbarung werden die Auswirkungen des thermischen Polens verbessert, indem die intrinsischen nichtlinearen Eigenschaften einiger 2D-Materialien genutzt werden, die in den Mantel-Löchern einer Siliziumdioxid-Doppellochfaser abgeschieden werden. Die abgeschieden Materialien sind dabei die 2D-Übergangsmetall-Chalcogenide (2D-TMDC) $MoS_2$ und $WS_2$. Die Technik, welche die D2 für die Abscheidung in den Mantelkanälen einer Siliziumdioxidfaser mit Zweiloch-Stufenindex verwendet, besteht aus einem thermischen Zersetzungsprozess des Vorläufers Ammoniumtetrathiomolybdat $(NH4)_2MoS_4$ in einem 6%igen $H_2$/Ar-Strom. Mit dieser Technik ist es möglich, die beiden Mantelkanäle über eine Länge von $\approx$ 25 cm gleichmäßig mit einem Film beschichten, der aus einer Doppelschicht der 2D-Materialien besteht, wobei die mit 2D-Materialien beschichtete Faser anschließend thermisch gepolt und periodisch mit UV-Licht gelöscht wird, um den QPM-Zustand bei einer Wellenlänge von $\approx$1550 nm zu erreichen und eine Verstärkung der Nichtlinearität bei der mit der Doppelschicht versehenen Faser zu erreichen.

Der Nachteil dieser technischen Lösung besteht darin, dass sie explizit auf thermisch gepolte Fasern gerichtet ist. bei denen eine sehr, sehr geringe Nichtlinearität zweiter Ordnung durch periodisches Aufschmelzen der Faser und Polung durch starken Stromfluss besteht und dieser Effekt wird durch Multilagen vom TMDCs nur gering verstärkt wird.

Die Aufgabe der vorliegenden Erfindung besteht darin, ein Anordnung und ein Verfahren zur effizienten nichtlinearen Lichtkonversion anzugeben, welches die zuvor stehend genannten Nachteile des Standes der Technik vermeidet und insbesondere die drei Aspekte:

1. die lokale Konversionsrate, welche durch die Stärke der nichtlinearen Polarisation für ein gegebenes elektromagnetisches Feld für ein bestimmtes Material gegeben ist,

2. die Interaktionsskala, welche durch Interaktionslänge, Interaktionsquerschnitt, sowie die Leistungsbeständigkeit der Konversionsstruktur bestimmt wird, und

3. die dispersiven Eigenschaften (definiert, inwiefern eine lokal effiziente Konversion in einem System makroskopisch genutzt werden können). gleichzeitig optimal erfüllt.

Gelöst wird diese Aufgabe durch einen Anordnung gemäß dem Hauptanspruch 1, durch ein Verfahren gemäß dem nebengeordneten Anspruch 5 und einer Verwendung gemäß dem nebengeordneten Anspruch 9.

Vorteilhafte Ausgestaltungen sind den abhängigen Unteransprüchen entnehmbar.

Das Wesen der Erfindung besteht darin, dass die Anordnung und das Verfahren zur effizienten nichtlinearen Konversion von Licht in optischen Fasern und Wellenleitern auf dem direkten Wachstum von atomar dünnen Übergangsmetalldichalkogenen (Transiton Metal Dichalcogenides, TMDCs) auf dem wellenleitenden Bereich optischer Fasern oder vergleichbarer optischer Wellenleiter basiert.

Unter einer Anordnung versteht man ein Bauteil im Sinne der Verbindungen von einer oder mehreren getrennten atomar dünnen zweidimensionalen TMDC-Schichten mit herkömmlichen optischen Wellenleitern oder Fasern zur Ermöglichung oder Verstärkung der nichtlinearen Wechselwirkung von Licht, welches in einer Faser- bzw. Wellenleitermode geführt wird. Dabei trägt die Faser- oder Wellenleiter vermittels einer oder mehrerer lichtführender Moden (im weiteren "Mode" genannt) zur Lichtführung und zur Steuerung der dispersiven Eigenschaften bei.

Die TMDC-Schicht, welche direkt mit der Mode überlappt, steuert die hauptsächlich die nichtlineare Wechselwirkung bei. Die Verbindung erfolgt durch direktes und gesteuertes Wachstum von TMDCs auf der optischen Faser- bzw. Wellenleiter in einem geeigneten Prozess.

Mit dieser technischen Lösung ist es möglich, die nichtlineare Wechselwirkung von optischen Fasern und Wellenleitern massiv zu verstärken und nichtlineare Lichtkonverter bei deutlich niedrigeren optischen Leistungen zu betreiben bzw. eine höhere Konversionseffizienz zu erreichen oder nichtlineare Effekte auszunutzen, welche in bestimmten Klassen von Materialien und Wellenleitern prinzipiell unzugänglich sind.

Zur ersten Klasse gehören Effekte basierend auf Vierwellenmischung, welche zur Erzeugung räumlich kohärenten Weißlichts / Superkontinuum [A. V. Husakou and J. Herrmann, Supercontinuum Generation of Higher-Order Solitons by Fission in Photonic Crystal Fibers, Phys. Rev. Lett. 87, 203901 (2001)] oder zur Laserpulskompression (spektrale Verbreiterung [V. Karpman, Selfmodulation of nonlinear plane waves in dispersive media, J. Exp. Theor. Phys. 6, 277 (1967)] führt und als Solitonenkompressor [J. M. Hickmann and A. Gomes, Dynamics of femtosecond soliton-effect optical compression in monomode fibers, Opt. Commun. 97, 333-336 (1993)] zur opto-optischen Signalverarbeitung / zeitliche Linse [R. Salem, M. A. Foster, A. C. Turner, D. F. Geraghty, M. Lipson, and A. L. Gaeta, Optical time lens based on four-wave mixing on a silicon chip, Opt. Lett. 33, 1047-1049 (2008)], Wellenlängenkonversion [H. Fukuda, K. Yamada, T. Shoji, M. Takahashi, T. Tsuchizawa, T. Watanabe, J. ichi Takahashi, and S. ichi Itabashi, Four-wave mixing in silicon wire waveguides, Opt. Express 13, 4629-4637 (2005)] sowie zur Erzeugung von kohärenten Lichts kurzer Wellenlänge /dritte Harmonische [A. Efimov, A. J. Taylor, F. G. Omenetto, J. C. Knight, W. J. Wadsworth, and P. S. J. Russell, Phase-matched third harmonic generation in microstructured fibers, Opt. Express 11, 2567-2576 (2003)] genutzt werden.

Zur zweiten Klasse gehören Effekte basierend auf der zweiten Harmonischen, welche in klassischen Wellenleitermaterialien, wie amorphen Festkörpern (Glas), und hochsymmetrischen kristallinen Festkörpern (Silizium) nicht auftreten [R. W. Boyd, Nonlinear optics (Academic press, 2003)]. Dazu gehören die Erzeugung kohärenten Lichts kurzer Wellenlänge aus einer oder zwei Pumpwellen (zweite Harmonische, Summenfrequenzmischung), und die Erzeugung kohärenten Lichts größerer Wellenlänge (Differenzfrequenzmischung) sowie von Photonenpaaren (spontane parametrische Generation).

Nichtlinear erzeugtes Licht, basierend auf den oben genannten Effekten wird beispielweise in der Materialanalyse / Spektroskopie, in der optischen Kommunikation, in der Quantentechnologie, in der Lasermaterialbearbeitung, der optischen Messtechnik, sowie in der Mikroskopie / Lebenswissenschaften zum Einsatz gebracht. Eine Effizienzsteigerung erlaubt hier neue Anwendungen zu erschließen und bestehende Anwendungen kosten- und energieeffizienter zu gestalten.

Der Vorteil dieser technischen Lösung besteht darin, dass durch die Verbindung einer oder weniger Atomlagen von TMDCs mit einem Teil der Mode die nichtlineare Wechselwirkung deutlich verstärkt wird, ohne die linearen Eigenschaften der Mode wesentlich zu beeinflussen. Somit sind der 1. bis 3. Aspekt unabhängig optimierbar.

Die direkte Abscheidung von TMDCs auf die Außen- oder Innenseite einer Faser oder von Wellenleitern garantiert eine hohe Materialqualität, große Kontaktflächen und reproduzierbare Ergebnisse.

Die Wellenlängenkonversion und Weißlichterzeugung wird damit bei deutlich geringeren Spitzenleistungen und mit deutlich kleineren und preiswerteren Strahlquellen möglich und Photonenpaarquellen werden deutlich effizienter.

Durch die Möglichkeit nichtlineare Lichtkonverter in geführten Systemen werden diese Systeme integrierbarer und robuster als Freistrahlsysteme.

Die technische Lösung in Form der Anordnung / des Bauteil besteht aus einem optischen Wellenleiter oder einer optischen Faser / Fasercladding- oder Wellenleitersubstrat mit einer angepassten Geometrie, welche die Lichtleitungseigenschaften der Fasermode / der Fasermoden / des strukturierten, wellenleitenden Faserkern mit designten Dispersionseigenschaften definiert.

Zusätzlich dazu kann die Mode mit der physischen Oberfläche des Wellenleiters / der äußeren Wellenleiteroberfläche oder mit einem zugänglichen Hohlraum / der inneren Wellenleiteroberfläche überlappen.

Bei der Herstellung der TMCs wird bei konvektivem oder erzwungenem Transport der Atmosphäre auf die Oberfläche des Wellenleiters oder der Faser oder der Innenfläche bei konvektivem oder erzwungenem Transport der Atmosphäre entlang von Hohlräumen des Wellenleiters oder der Faser eine mittels chemischer Gasphasenabscheidung oder Atomlagenabscheidung in einem Reaktor / Reaktorgefäß zur Erstellung atmosphärischer Parameter Abdeckung in Form einer aufgewachsen, atomar dünnen Schicht aus Übergangsmetalldichalcogniden erzeugt, wobei die Abdeckung vollständig oder teilweise und die Ausrichtung der Kristallite stochastisch geordnet ist.

Übergangsmetalldichalcogenide sind dabei besonders vorteilhaft $MoS_2$, $WS_2$, $MoSe_2$, $MoS_{2(1-x)}Se_{2x}$, $WS_{2(1-x)}Se_{2x}$, $MoS_2WS_2$, $MoSe_2WSe_2$, $MoS_2NbSe_2$, $MoSe_2NbSe_2$, $MoSSe$ oder $WSSe$.

Diese Anordnung kann durch eine Nachbehandlung mit einer Abdeckschicht, welche mittels eines geeigneten Verfahrens aufgebracht wurde, versehen sein.

In die Mode der Anordnung ist Licht einkoppelbar, wobei durch die nichtlineare Wechselwirkung in der Fasermode / im nichtlinearen Wellenleiter mit TMDC-Beschichtung dieses Licht konvertierbar zu ausgekoppelten, nichtlinear modifiziertem Licht oder zu neuem Licht in Form von ausgekoppelten, nichtlinear genierten Licht ist.

Diese Konversion beruht dabei zu großen Teilen auf der nichtlinearen Wechselwirkung innerhalb der TMDC-Schicht.

Dabei ist als nichtlineare Wechselwirkung Drei- oder Vierwellenmischung nutzbar, wobei das eingekoppelte Licht eine oder mehrere Pumpwellen darstellt.

Die Wechselwirkung ist darüber hinaus durch die Faserdispersion und die Modeneigenschaften modulierbar.

Das modifizierte oder neu erzeugte Licht (Nutzlicht) ist aus der Faser auskoppelbar und kann somit zur Anwendung gebracht werden,

Die Wechselwirkung ist dabei einfach oder mehrfach degeneriert sowie spontan oder nichtspontan.

Die Wechselwirkung kann auf Summenfrequenzgeneration, Differenzfrequenzgeneration, Generation der zweiten Harmonischen, Generation der dritten Harmonischen, Selbstphasenmodulation, Superkontinuumserzeugung, stimulierte Raman-Streuung oder Generation dispersiver Wellen basieren.

Die Wechselwirkung zwischen verschiedenen geführten Moden des Wellenleiters bei verschiedenen Wellenlängen vermitteln.

Das Verfahren zur Herstellung dieser Anordnung / dieses Bauteils läuft als modifiziertes chemisches Dampfabscheidungsverfahren wie folgt ab, um Einzelkristalle oder wenige Atomlagen dicke Schicht-TMDC's über Faserlängen von wenigen Zentimetern abzuscheiden:

1. Ableitung /Auswahl eines geeigneten Wellenleiters oder einer optischen Faser mit anwendungsbezogen günstigen Eigenschaften und einen signifikanten Energietransport auf der Oberfläche des Wellenleiters oder in einem Hohlraum. Dazu gehören:

a. ein geringer Modenquerschnitt zur Erhöhung der Lichtintensität bei gegebener Leistung sowie zur Erhöhung der relativen Modenanteile, die in Hohlräumen geführt werden

b. anwendungsbezogen hinreichende geringe optische Verluste durch Absorption, Streuung, Biegung oder ungünstige Führungseigenschaften

c. günstigen Dispersionseigenschaften, wie sie bspw. zum Phasenmatching nichtlinearer Wellenbenötigt werden.

Dabei wird der Wellenleiter oder die Faser aus einem Basismaterial gewählt, welches günstige Modeneigenschaften nach sich zieht und hinreichend temperaturstabil ist, um den Beschichtungsprozess ohne Schäden zu durchlaufen. Günstig sind in diesem Zusammenhang photonische Kristallfasern aus $SiO_2$ oder geätzte Wellenleiter aus $SiO_2$ oder Si. und

2. Wachstum von TMDCs auf der der Oberfläche der Faser oder des Wellenleiters oder in einem Hohlraum in einem gasphasenbasierten Beschichtungsprozess, beispielsweise in einem CVD-Reaktor oder einem ALD-Reaktor mit geeigneten Prekursorgasen und ggf. unter Zuhilfenahme weiterer Energielieferanten, wie reaktiver Chemikalien oder von Plasmen. Dabei muss der Reaktor die passenden Prekursoren zur Verfügung stellen, an der gewünschten Abscheideposition die passenden Umgebungsbedingungen herstellen und das Reaktionsgemisch zur Abscheideposition führen.

Gegebenen Falles kann, soweit dies erforderlich ist in einem weiteren 3. Schritt eine Nachbehandlung erfolgen. Diese Nachbehandlung kann der Modifikation der TMDCs dienen (bpsw. durch Induktion von Fehlstellen mittels Plasma, oder Ionenstrahlschädigungschädigung) oder deren Funktionalisierung (durch Anreichung mit selektiv reaktiven Gruppen) oder deren Passivierung, bspw. durch Überschichtung mit einer Schutzschicht. Die Schritte 2 und 3 können dabei mehrfach wiederholt werden.

In das so vermittels chemischer Dampfabscheidung erzeugte Bauteil mit monolayern $MoS_2$- und $WS_2$-Kristallen auf dem Kern mikrostrukturierter exponierter Kern-Optikfasern in Form eines Wellenlleiters, bspw. auf dem Kern einer Kieselglasfaser mit exponiertem Kern (auch ECF genannt), erfolgt die bestimmungsgemäße Einkopplung von Licht in die Mode des Wellenleiters. Das Licht wird durch den Wellenleiter transportiert und interagiert mit einem Teil der Mode mit den TMDCs deren nichtlinear induzierte Polarisation bewirkt eine Konversion des geführten Lichts, wobei das erzeugte Licht wiederum bevorzugt in der Fasermode propagiert. Anschließend erfolgt die Auskopplung des konvertierten Lichts.

Die Erfindung wird nachstehend an Hand der schematischen Zeichnung und des Ausführungsbeispiels näher erläutert. Dabei zeigt:

Fig. 1a: eine schematische Darstellung einer Ausführungsform des erfindungsgemäßen Bauteils,

Fig. 1b: das erfindungsgemäße Bauteil gemäß Fig. 1a bei seiner bestimmungsgemäßen Verwendung,

Fig. 2a: ein ECF-basierten 2DFWG, bei dem PL durch eine Fasermode angeregt wird und in den Freiraum und in die Fasermode emittiert wird und in beide Richtungen detektiert werden kann,

Fig. 2b: ein optisches Mikroskopbild der $MoS_2$-beschichteten ECF mit $MoS_2$-Kristallen auf dem freiliegenden Kernteil der Faser (als helle Dreiecke deutlich sichtbar) sowie das dazugerhörige Inset eines typisches Raman-Spektrums von $MoS_2$-Monolayer-Kristallen, die auf einem ECF aufgewachsen sind,

Fig. 2c: ein Querschnitts-SEM-Bild des Kernbereichs des ECF (Helle Regionen sind $SiO_2$, während dunkle Regionen frei von Material sind), wobei der Gasstrom am CVD-Reaktor durch orangefarbene Pfeile angezeigt ist,

Fig. 2d: eine Normdarstellung der simulierten elektrischen Feldverteilung der fundamentalen Fasermodebei 1570 nm,

Fig. 2e: ein Querschnitts-PL-Mapping von $MoS_2$-beschichteten ECF, das zum besseren Verständnis mit einem SEM-Bild überlagert ist,

Fig. 3a-c: eine Faserintegrierte PL- und Transmissionsmessung, bei der Laser/Weißlichtquelle in die geführte Mode der TMDCbeschichteten ECF gekoppelt ist. Dort regt sie Exzitonen in der TMDC -Beschichtung an, die PL wieder in den Grundmodus emittieren. Das PL-Signal wird dann aufgezeichnet, nachdem es durch die Faser propagiert ist.

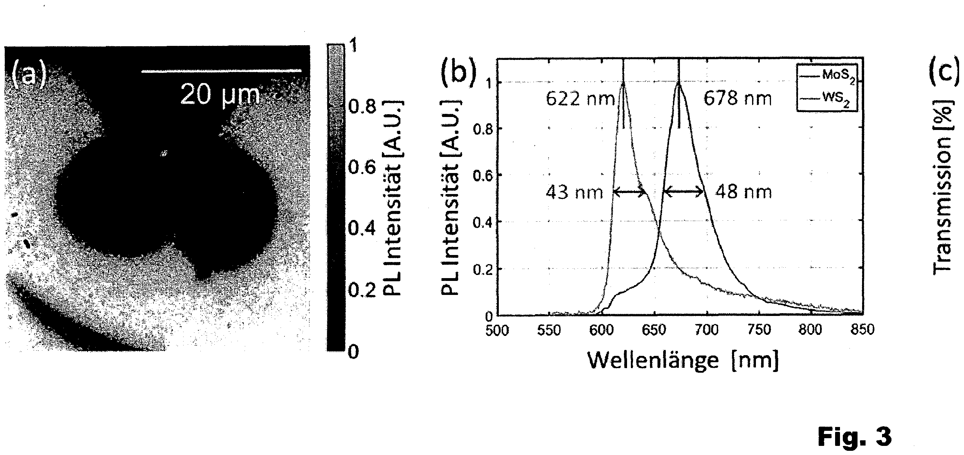

Fig. 3a: ein Falschfarbbild von PL, das von einem 532 nm-Laser in einem $MoS_2$-beschichteten ECF angeregt wird, wobei das Hintergrundbild die Rückseite des ECF ist, welche über dieselbe Kamera aufgezeichnet wird,

Fig. 3b: ein normalisierte PL-Spektren von $MoS_2$- und $WS_2$-beschichteten ECF, die von einem 532 nm-Laser angeregt werden,

Fig. 3c: ein Transmissionsspektrum durch eine $MoS_2$-beschichteten ECF, wobei zur Übertragungsmessung eine weiße LED-Lichtquelle verwendet wird (dabei zu beachten, dass die Werte stark durch Messungenauigkeit beeinflusst werden, da die Lichtquelle für diesen Spektralbereich nicht leistungsstark ist).

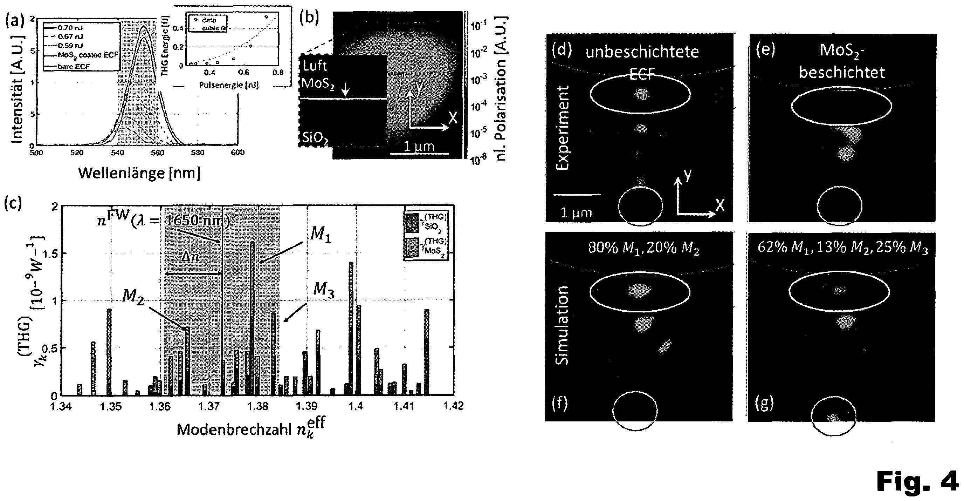

Fig. 4a-g Dritte harmonische Spektren. Das THG-Band von 540 bis 560 nm ist orange markiert (Inset) und zeigt die Leistungsabhängigkeit der THG für die $MoS_2$ beschichtete ECF, mit kubischem Fit,

Fig. 4 b: Log-Plot des nichtlinearen Polarisationsfeldes, das die THG induziert. Das Feld wird durch die dritte Potenz der FM und die lokale nichtlineare Wirkung von $SiO_2$ und $MoS_2$ erzeugt, wobei der Inset ein Zoom der freiliegenden Oberfläche ist, der den starken Beitrag der hochlokalisierten nichtlinearen

Polarisation von $MoS_2$ verdeutlicht,

Fig. 4 c: Modale THG-Überlappungskoeffizienten bei einer TH-Wellenlänge von 550 nm, berechnet für alle HOMs k, die sich in der Nähe des Phasenanpassungspunkts bei befinden. Der PM-Bereich mit ist blau markiert. Die gestapelten farbigen Balken markieren die Beiträge des $SiO_2$-Kerns (blau) bzw. der MoS2-Beschichtung (orange) zu $\gamma_k^{THG}$,

Fig. 4 d: ein Bild der Lichtverteilung des THG-Feldes am Ende einer unbeschichteten ECF,

Fig. 4 e: ein Bild der Lichtverteilung des THG-Feldes am Ende einer $MoS_2$-beschichteten ECF,

Fig. 4 f: ein Bild am Ende des ECF als Überlagerung von $M_1$ und $M_2$ mit einer Leistungsverteilung von 80/20, in etwa nach den Überlappungskoeffizienten $\gamma_k^{THG}$ für die unbeschichtete ECF und

Fig. 4 g: Simuliertes Bild am Ende des ECF als Überlagerung der Moden $M_1$, $M_2$ und $M_3$, nach einer 62/13/25 Leistungsverteilung in etwa nach den Überlappungskoeffizienten für die $MoS_2$-beschichteten ECF.

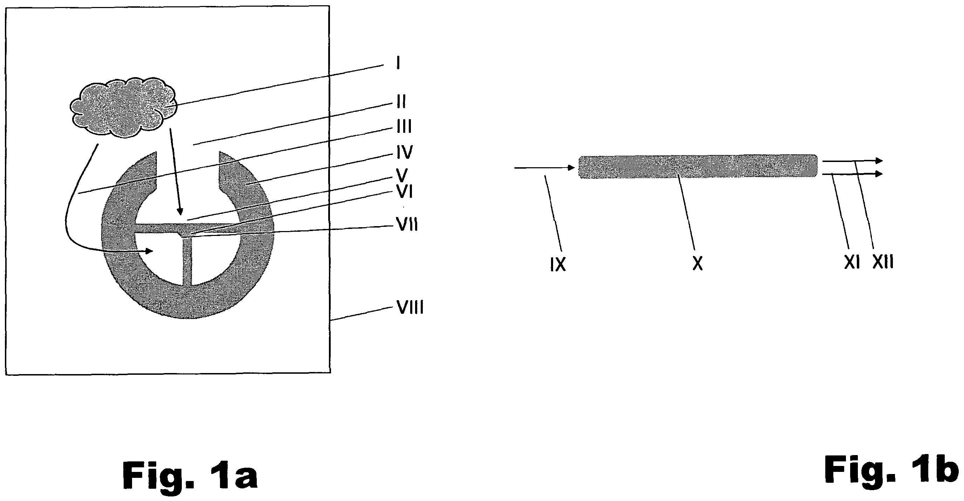

Die in der Fig. 1a dargestellte Anordnung / das Bauteil besteht aus einem optischen Wellenleiter oder einer optischen Faser / Fasercladding- oder Wellenleitersubstrat (IV) mit einer angepassten Geometrie, welche die Lichtleitungseigenschaften der Fasermode / der Fasermoden / des strukturierten, wellenleitenden Faserkern mit designten Dispersionseigenschaften (VI) definiert.

Zusätzlich dazu kann die Mode mit der physischen Oberfläche des Wellenleiters / der äußeren Wellenleiteroberfläche (V) oder mit einem zugänglichen Hohlraum / der inneren Wellenleiteroberfläche (VII) überlappen.

Darüber hinaus befindet sich auf der Oberfläche bei konvektiv oder erzwungenen Transport der Atmosphäre auf die Oberfläche des Wellenleiters oder der Faser (II) oder der Innenfläche bei konvektiv oder erzwungenen Transport der Atmosphäre entlang von Hohlräumen des Wellenleiters oder der Faser (III) eine mittels chemischer Gasphasenabscheidung oder Atomlagenabscheidung in einem Reaktor / Reaktorgefäß zur Erstellung atmosphärischer Parameter (VIII) erzeugte Abdeckung in Form einer aufgewachsen, atomar dünnen Schicht aus Übergangsmetalldichalcogniden, wobei die Abdeckung vollständig oder teilweise und die Ausrichtung der Kristallite stochastisch geordnet ist.

Übergangsmetalldichalcogenide sind dabei besonders vorteilhaft $MoS_2$, $WS_2$, $MoSe_2$, $MoS_{2(1-x)}Se_{2x}$, $WS_{2(1-x)}Se_{2x}$, $MoS_2WS_2$, $MoSe_2WSe_2$, $MoS_2NbSe_2$, $MoSe_2NbSe_2$, MoSSe oder WSSe.

Diese Anordnung kann durch eine Nachbehandlung mit einer Abdeckschicht, welche mittels eines geeigneten Verfahrens aufgebracht wurde, versehen sein.

In die Mode der Anordnung ist, wie in Fig. 1b beispielhaft gezeigt, Licht (IX) eingekoppbar, wobei durch die nichtlineare Wechselwirkung in der Fasermode / im nichtlinearen Wellenleiter mit TMDC-Beschichtung (X) dieses Licht konvertierbar zu ausgekoppelten, nichtlinear modifiziertem Licht (XI) oder zu neuem Licht in Form von ausgekoppelten, nichtlinear genierten Licht (XII) ist.

Diese Konversion beruht dabei zu großen Teilen auf der nichtlinearen Wechselwirkung innerhalb der TMDC-Schicht.

Dabei ist als nichtlineare Wechselwirkung Drei- oder Vierwellenmischung nutzbar, wobei das eingekoppelte Licht eine oder mehrere Pumpwellen darstellt.

Die Wechselwirkung ist darüber hinaus durch die Faserdispersion und die Modeneigenschaften modulierbar.

Das modifizierte oder neu erzeugte Licht (Nutzlicht) ist aus der Faser auskoppelbar und kann somit zur Anwendung gebracht werden,

Die Wechselwirkung ist dabei einfach oder mehrfach degeneriert sowie spontan oder nichtspontan.

Die Wechselwirkung kann auf Summenfrequenzgeneration, Differenzfrequenzgeneration, Generation der zweiten Harmonischen, Generation der dritten Harmonischen, Selbstphasenmodulation, Superkontinuumserzeugung, stimulierte Raman-Streuung oder Generation dispersiver Wellen basieren.

Die Wechselwirkung zwischen verschiedenen geführten Moden des Wellenleiters bei verschiedenen Wellenlängen vermitteln.

Das Verfahren zur chemischen Dampfabscheidung von monolayern $MoS_2$- und $WS_2$-Kristallen auf dem Kern mikrostrukturierter exponierter Kern-Optikfasern, bspw. auf dem Kern einer mikrostrukturierter Kieselglasfaser mit exponiertem Kern (auch ECF genannt) umfasst folgende Schritte, um Einzelkristalle oder wenige Atomlagen dicke Schicht-TMDC's über Faserlängen von wenigen Zentimetern abzuscheiden:

1. Ableitung / Auswahl eines geeigneten Wellenleiters oder einer optischen Faser mit anwendungsbezogen günstigen Eigenschaften und einen signifikanten Energietransport auf der Oberfläche des Wellenleiters oder in einem Hohlraum. Dazu gehören:

- ein geringer Modenquerschnitt zur Erhöhung der Lichtintensität bei gegebener Leistung sowie zur Erhöhung der relativen Modenanteile, die in Hohlräumen geführt werden,
- anwendungsbezogen hinreichende geringe optische Verluste durch Absorption, Streuung, Biegung oder ungünstige Führungseigenschaften sowie
- günstigen Dispersionseigenschaften, wie sie bspw. zum Phasenmatching nichtlinearer Wellenbenötigt werden.

Dabei wird der Wellenleiter oder die Faser aus einem Basismaterial gewählt, welches günstige Modeneigenschaften nach sich zieht und hinreichend temperaturstabil ist, um den Beschichtungsprozess ohne Schäden zu durchlaufen. Günstig sind in diesem Zusammenhang photonische Kristallfasern aus $SiO_2$ oder geätzte Wellenleiter aus $SiO_2$ oder Si.

2. Wachstum von TMDCs auf der der Oberfläche der Faser oder des Wellenleiters oder in einem Hohlraum in einem gasphasenbasierten Beschichtungsprozess, beispielsweise in einem CVD-Reaktor oder einem ALD-Reaktor mit geeigneten Prekursorgasen und ggf. unter Zuhilfenahme weiterer Energielieferanten, wie reaktiver Chemikalien oder von Plasmen. Dabei muss der Reaktor die passenden Prekursoren zur Verfügung stellen, an der gewünschten Abscheideposition die passenden Umgebungsbedingungen herstellen und das Reaktionsgemisch zur Abscheideposition führen.

3. Gegebenen Falles kann bei Bedarf auch noch eine Nachbehandlung erfolgen. Diese Nachbehandlung kann der Modifikation der TMDCs dienen (bpsw. durch Induktion von Fehlstellen mittels Plasma, oder Ionenstrahlschädigungschädigung) oder deren Funktionalisierung (durch Anreichung mit selektiv reaktiven Gruppen) oder deren Passivierung, z.B. durch Überschichtung mit einer Schutzschicht.

4. Schritte 2 und 3 können dabei wiederholt werden.

In das so hergestellte Bauteil erfolgt bestimmungsgemäß eine Einkopplung von Licht in die Mode des Wellenleiters. Das Licht wird durch den Wellenleiter transportiert und interagiert mit einem Teil der Mode mit den TMDCs deren nichtlinear induzierte Polarisation bewirkt eine Konversion des geführten Lichts, wobei das erzeugte Licht wiederum bevorzugt in der Fasermode propagiert. Anschließend erfolgt die Auskopplung des konvertierten Lichts.

Vermittels dieses Verfahrens ist eine skalierbare Funktionalisierung optischer Fasern mit atomar dünnen Halbleitern möglich.

Die Anordnung, hergestellt vermittels eines skalierbaren und reproduzierbaren Wachstums hochwertiger Atomlagen auf optischen Fasern / die hergestellten Bauteile mit den atomar dünnen Übergangsmetall-dichalcogeneiden sind für integrierte optoelektronische und photonische Systeme aufgrund ihrer exzitongetriebenen linearen und nichtlinearen Licht-Materie-Wechselwirkung sehr gut geeignet, wobei deren Integration in optische Fasern neue Möglichkeiten in der optischen Kommunikation, kontaktlosen Messtechnik und Faser-Optoelektronik eröffnet.

Die Anordnung / das Bauteil eröffnen in der Glasfasertechnologie bpsw. unterschiedliche Anwendungsmöglichkeiten von 2D-funktionalisierten Wellenleitern.

So ist das gleichzeitige Anregen und Sammeln von Photolumineszenz des exzitonischen 2D-Materials mit den Fasermoden möglich, was einen neuen Weg zur Fernerkundung ermöglicht.

Auch kann durch die dritte harmonische Generation die stark lokalisierte nichtlineare Polarisation der Monolayer verändert werden, was einen neuen Weg zur Anpassung nichtlinearer optischer Prozesse in Fasern eröffnet.

Dies wird ermöglicht, indem TMDCs (Monolagen-TMDs) direkt auf dem optischen Kern von mikrostrukturierten Fasern mit exponiertem Kern (ECFs) aufwachsen und in einem skalierbaren Prozess in 2DFWGs umgewandelt werden. Insbesondere das Wachstum von $MoS_2$- und $WS_2$-Monolagen-Kristallen auf dem optischen Kern von Kieselglas-ECF sind von besonderer Bedeutung, in dem deren Wechselwirkung mit den evaneszenten Feldern hochgradig lokalisierter Moden mit sich bringt. Durch das modifizierte chemische Dampfabscheidungsverfahren wird ein Wachstum ermöglicht, was zu Ansammlungen von Monolagen-TMDC-Kristallen von hoher Qualität mit einer typischen Länge von 30 $\mu$m auf ECFs mit einer Länge von wenigen Zentimetern führt.

Diese skalierbare Technik ebnet den Weg für 2DFWGs als neues Werkzeug für integrierte optische Architekturen, aktive Glasfasernetzwerke, verteilte Sensorik und photonische Chips.

In den zwei folgenden Ausführungsbeispielen werden die möglichen Funktionalitäten dieser 2DFWGs dargelegt.

Das erste Ausführungsbeispiel zeigt die faserbasierte Anregung und Sammlung von Photolumineszenz (PL), die Wege für zukünftige Experimente in Exzitonics und Remote-Faser-basierten Sensorschemata ebnen kann.

Das zweite Ausführungsbeispiel zeigt die Art und Weise, wie die hochnichtlineare TMDC-Beschichtung die nichtlineare Wellendynamik in ECFs verändert, indem verstärkte dritte harmonische Generation (THG) untersucht wird. Im Allgemeinen zeigt dies, dass 2DFWGs verwendet werden können, um das nichtlineare Ansprechen integrierter Wellensysteme zu verbessern und anzupassen, ohne dass die geführten Moden selbst geändert werden, was zu neuen Anwendungen in der nichtlinearen Lichtumwandlung und der Verarbeitung optischer Signale führt.

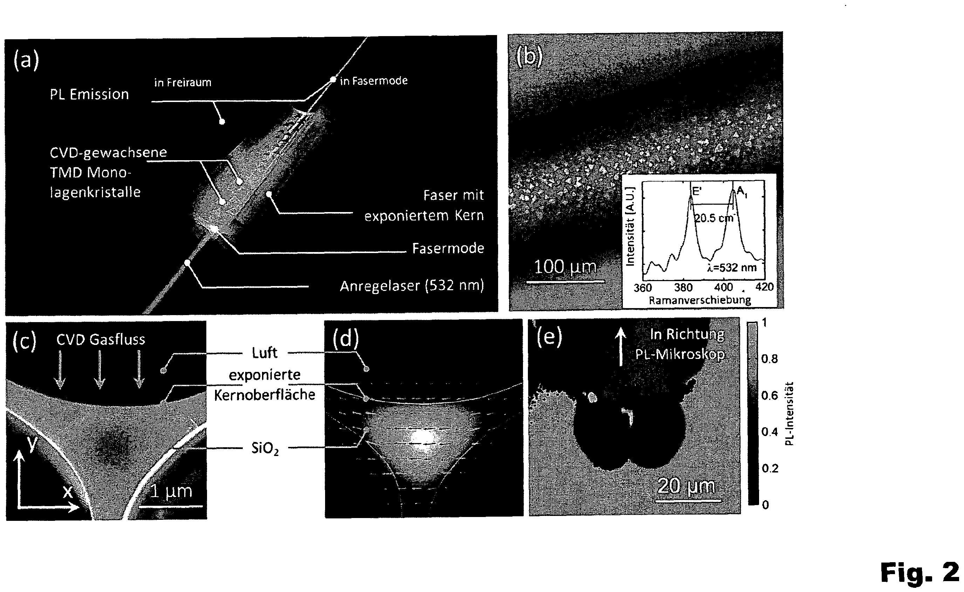

Das Gesamtkonzept dieser beiden Ausführungsbeispiele ist in Fig. 2 (a) dargestellt. Die ECFs werden mit $MoS_2$-Kristallen und $WS_2$-Kristallen auf der gesamten Oberfläche der Nut beschichtet, die auch die obere Oberfläche des ECF-Kerns bildet. Ein Laser wird in die Grundmode (FM) des ECF gekoppelt, die über den evaneszenten Teil der Mode mit den TMDCs interagiert. Die resultierende Polarisation; z.B. PL oder drittes harmonisches (TH) Licht, wird wieder in die Fasermode oder in den freien Raum gekoppelt, wo es zur weiteren Analyse gesammelt werden kann.

Ein optisches Mikroskopbild der beschichteten exponierten Seite des ECF ist in Fig. 2b samt hochwertiger $MoS_2$-Kristalle dargestellt. Die Brennebene des Bildes ist so gewählt, dass sie mit dem Boden der Nut übereinstimmt, die über die gesamte Länge von 60 mm des beschichteten ECF verläuft, die gleichzeitig die Oberseite des freiliegenden Kerns bildet.

Fig. 2c zeigt eine Querschnitts-Rasterelektronenmikroskopie (SEM) des Kernbereichs der ECF [ein SEM-Bild des gesamten ECF-Querschnitts ist in Fig. 3a dargestellt]. Der Kern ist an drei Streben aus Kieselglas aufgehängt. Die obere Grenze des Kerns bildet den Boden einer Nut, die entlang der gesamten Länge des ECF verläuft. Im CVD-Reaktor ist somit die obere Grenze des Kerns vollständig den CVD-Reaktanten ausgesetzt.

So werden Monolagen- TMDC-Kristalle auf der gesamten Oberfläche des ECF gewachsen und damit auch auf der exponierten Oberfläche des Faserkerns. Ihre Größe, Verteilung und Dicke können im Wachstumsprozess eingestellt werden.

Nach sorgfältiger Optimierung werden fast ausschließlich Monolagen gewachsen, wie aus dem Inset von Fig. 2b hervorgeht, dass ein typisches Raman-Spektrum der $MoS_2$-Kristalle auf der ECF zeigt, das charakteristische Abstände zwischen den Raman-Modi für Monolagen aufweist.

Beispiele für alternative Wachstumsmodi zusammen mit ihren Raman-Spektren sind in Fig. 3c bis e dargestellt.

Der Kern der ECF hat einen Durchmesser ~2 $\mu$m und unterstützt zwei nicht degenerierte FMs, die weitgehend entlang der x- und y-Richtung polarisiert sind. Allerdings hat der x-polarisierte FM, mit der Polarisation parallel zur beschichteten Oberfläche ausgerichtet, eine bessere Feldüberlappung mit der TMDc-Schicht und seine Polarisation ist an der großen $\chi^{(3)}_{xxxx}$-Komponenten des nichtlinearen Tensors der TMDCs ausgerichtet. Daher werden alle Experimente und Simulationen mit dem x-polarisierten FM durchgeführt. Seine Feldverteilung wurde numerisch berechnet und wird für eine Wellenlänge $\lambda_0$ = 1570 nm in Fig. 2d dargestellt.

Aufgrund der geringen Größe des Kerns ist der FM mit einer effektiven Fläche von etwa 3.5 $\mu$m$^2$ stark begrenzt. 1,6 % der elektromagnetischen Energie fließt im Luftbereich über dem Kern des ECF und kann somit effektiv mit den TMDC-Kristallen interagieren.

Erstes Ausführungsbeispiel: Wellenleiter-Photolumineszenz

Als Erstes wird die Position und PL-Aktivität der TMDC-Kristalle geprüft, die auf dem gekrümmten ECF-Kern gewachsen sind, indem eine Querschnitts-PL-Emissionsmessung durchgeführt wird.

Die PL-Karte, die in Fig. 2e dargestellt ist, wird zum besseren Verständnis mit einem Querschnitts-SEM-Bild der ECF überlagert. Beleuchtung und Sammlung von PL-Licht werden seitlich durch die Nut des ungeschnittenen ECF geführt. Dabei ist festzustellen, dass die PL dem Umriss der ECF folgt, was darauf hinweist, dass die TMDC-Kristalle in direktem Kontakt mit der gesamten Oberfläche des ECF gewachsen sind. Zu beachten ist dabei, dass der Teil des PL-Lichts, der sich von der Bildmitte nach unten erstreckt, durch die Beugung am ECF-Kern und seine Interaktion mit der Konfokalblende verursacht wird und nicht auf das Vorhandensein von TMDCs im Kern hinweist.

Eine PL-Karte entlang der Ausbreitungsrichtung und ein PL-Spektrum ist in Fig. 4 dargestellt.

Die geführte Wellenanregung von PL in 2DFWGs wird durch die Anregung und Zerfall von Exzitonen in der TMDC-Beschichtung vermittelt.

Exzitonen in TMDCs sind besonders von Vorteil, da sie Spin-Valley-Kopplung aufweisen und für die Emission von Einzelphotonen wichtig sind.

Es wird einen grünen ($\lambda$ = 532 nm) Laser unkontrollierter Polarisation in den ECF gekoppelt, der über das evaneszente Feld des FM Exzitonen anregt.

PL aus den TMDC-Monolayem wird entweder in den freien Raum emittiert oder wieder in die ECF-Mode gekoppelt.

Die Remission in geführte Moden wurde durch die Abbildung der Stirnfläche der Faser und durch Messung des Spektrums beobachtet. Die Ergebnisse werden in Fig. 3a und b dargestellt.

Das Bild der PL an der Stirnfacette des ECF wird langpassgefiltert, um Restlaserstrahlung zu entfernen und dann in Fig. 3a angezeigt. Zur besseren Orientierung wird ein Mikroskopbild der ECF selbst überlagert. Das PL-Licht wird deutlich von den geführten Moden im Kern der ECF emittiert. Dieses Licht wird dann spektroskopisch analysiert, wobei Exzitonenpeaks bei 678 nm ($MoS_2$) und 622 nm ($WS_2$) gemessen werden. Dies bedeutet, dass das evaneszente Feld der geführten Moden verwendet werden kann, um PL sowohl anzuregen als auch zu sammeln, so dass 2DFWGs, wie TMDC beschichtete ECFs, hochinteressant für integrierte Exzitonik und kontaktlose Sensorikanwendungen sind.

Die seitliche Emission in den freien Raum wurde mit einer seitlich montierten Kamera beobachtet, die den Boden der ECF-Nut abbildete. Damit erreicht man zusammengesetzte Bilder der Verteilung von PL über einen wesentlichen Teil der ECF und damit eine Verteilung von PL- aktiven TMDC-Kristallen.

Aus dem Bild einer $MoS_2$-beschichteten Faser kann man die Verteilung und die kumulative Länge von Monolagen-Kristallen auf der ECF extrahieren. Für dieses spezifische Ausführungsbeispiel sind 39 verschiedene $MoS_2$-Kristalle mit einer durchschnittlichen Länge pro Kristall von 25 $\mu$m und einem Füllfaktor von 5.4% vorhanden, obwohl die Abdeckung in späteren Chargen nach weiterer Optimierung des Verfahrens signifikant erhöht werden kann.

Ein Transmissionsspektrum durch die ECF wird in Fig. 3 c dargestellt. Es werden durch die Kopplung von weißem Licht in $MoS_2$-beschichtete ECF gewonnen. Dieses Spektrum wird mit dem imaginären Teil des Brechungsindex von $MoS_2$ dargestellt, die beiden Absorptionsspitzen 619 nm und 671 nm können somit deutlich mit der charakteristischen Exzitonenresonanz von TMDC identifiziert werden.

Zweites Ausführungsbeispiel; Verstärkung der dritten Harmonischen

TMDCs sind auch wegen ihrer starken nichtlinearen optischen Antwort pro Dicke besonders vorteilhaft. Bei Prozessen dritter Ordnung wird dies durch den nichtlinearen Brechungsindex $n_2$ mit einem Wert von

$$n_2^{MoS_2} \sim 2.7 \cdot 10^{-16}\ \mathrm{m^2/W}$$

für TMDCs quantifiziert, die auf Wellenleiter übertragen werden. Mit etwa vier Größenordnungen mehr als Kieselglas ist er extrem groß, obwohl niedrigere Werte auf planaren Substraten gemeldet werden.

So kann eine TMDC-Beschichtung einen wesentlichen Beitrag zu nichtlinearen Effekten in ECFs leisten, obwohl weniger als $10^{-4}$ des Energiefluss der FM im TMDC bei jeder Wellenlänge lokalisiert ist. Der Einfluss auf die Nichtlinearität kann durch Berechnung der jeweiligen Beiträge der $MoS_2$-Beschichtung und des $SiO_2$-Kerns zum Gesamtselbstphasenmodulationskoeffizienten

$\gamma = \gamma_{MoS_2} + \gamma_{SiO_2}$[33] quantifiziert werden. Tatsächlich sind $\gamma_{MoS_2} > \gamma_{SiO_2}$ für Wellenlänge von mehr als 1470 nm auffindbar, d.h. der nichtlineare Beitrag der TMD-Beschichtung dominiert für große Wellenlängen. Zu beachten ist dabei, dass auch noch größere $\gamma_{MoS_2}$ durch Optimierung der Feldüberlappung des FM mit der TMDC-Beschichtung erreicht werden können, um z.B. den Weg für TMDC-verbesserte Superkontinuumsgenerierungsexperimente zu öffnen.

Während viele nichtlineare Prozesse dritter Ordnung in Fasern beobachtet werden, ist THG besonders vorteilhaft, da es auf das gleichzeitige Zusammenspiel von Nichtlinearität, Modenanpassung und Phasenanpassung (PM) beruht. Dabei erfolgt keine nennenswerte Änderung der PM durch die TMDC-Beschichtung, da alle linearen Modeneigenschaften, mit Ausnahme der Verluste, von der TMDC-Beschichtung nicht beeinflusst werden.

Die ECFs des hier verwendeten Designs weisen PM nur für höhere TH-Moden (HOMs) bei einer TH-Wellenlänge von ca. 550 nm aus, was einer Fundamentalwellenlänge von 1650 nm entspricht.

Um zu zeigen, dass THG tatsächlich verbessert ist, wird TH mit einem gepulsten Laser, der bei einer Wellenlänge von $\lambda_0$ = 1570 nm und einer Pulsdauer von 32 fs funktioniert.

Fig. 4a zeigt das TH-Spektrum für drei verschiedene Eingangsenergien für eine unbeschichtete und eine $MoS_2$- beschichtete ECF. Dabei liegt konsequent mehr THG in der $MoS_2$- beschichteten ECF vor, was bedeutet, dass die TMDC-Beschichtung den THG-Prozess verstärkt. Dies ist besonders vorteilhaft, da die $MoS_2$-beschichteten ECFs über ihre Länge einen linearen Verlust von etwa 60 % aufweisen und der Vergleich für gleiche Eingangsenergie durchgeführt wird.

Bedingt durch Phasenanpassung beobachtet man TH nicht genau bei einem Drittel von $\lambda_0$, sondern in einem Spektralband von 540 nm bis 560 nm, dass in Fig. 4a gesondert markiert ist.

Das Spektrum der Fundamentalwelle (FW) Spektrum muss daher zunächst nichtlinear in ein THG-relevantes Teilband zwischen 1620 nm und 1680 nm verbreitert werden, damit TH erzeugt werden kann. Dies erklärt die etwas stärkere als kubische Skalierung im Inset von Fig. 4a. Die Ähnlichkeit des TH-Spektrums für beide ECF-Typen macht nochmals deutlich, dass die Phasenanpassung (PM) zwischen FW und TH in der Tat nicht von der $MoS_2$-Beschichtung beeinflusst wird.

Da eine PM-Modifikation somit ausgeschlossen ist, muss die vorliegende TH-Verbesserung mit dem Prozess der nichtlinearen Lichterzeugung selbst in Zusammenhang stehen.

Dieser Prozess wird durch das nichtlineare Polarisationsfeld

$$P^{\mathrm{THG}}\left(\frac{\lambda_0}{3}\right) = E_x^3(x,y;\lambda_0) \cdot \chi_{xxxx}^{(3)}(x,y)e_x$$

angetrieben. Hier ist $E_x(x,y)$ die x-Komponente des elektrischen Feldes der FW-Mode und $\chi_{xxxx}^{(3)}(x,y)$ das dominierende Element des nichtlinearen Tensors des THG-Prozesses für die TMDC-Beschichtung bzw. den Kieselsäurekern. Die Form von $P^{\mathrm{THG}}$ wird in Fig. 4b in logarithmischer Skalierung dargestellt.

Es gibt zwei wichtige Beiträge: die räumlich glatte nichtlineare Polarisation aus dem $SiO_2$-Kern und den starken, aber stark lokalisierten Beitrag der TMDC-Beschichtung, besser sichtbar im Inset.

Die so erzeugte TH-Strahlung wird auf die TH-Moden verteilt, deren Größe durch einen individuellen Überlappungskoeffizienten $\gamma_k^{(\mathrm{THG})}$ für jeden TH-Modus beschrieben wird. Die Zugabe der TMDC-Beschichtung verbessert somit nicht die nichtlineare Interaktion für alle HOMs gleichermaßen, sondern steigert jene, die oberflächennah lokalisiert und mit vorherrschender x-Polarisation versehend sind.

Diese modenselektive nichtlineare Verstärkung wird in Fig. 4c quantifiziert; dort sind $\gamma_k^{(\mathrm{THG})}$-Werte für alle TH-HOMs in der Nähe des PM-Punkts dargestellt. Der PM-Bereich enthält 11 HOMs und ist durch die Schattierung gekennzeichnet. Der Beitrag von $SiO_2$ und $MoS_2$ ist in verschiedenen Farben gekennzeichnet. Während $\gamma_k^{(\mathrm{THG})}$, es alle HOMs wächst, ist das Wachstum für alle Moden sehr stark unterschiedlich ausgeprägt, d.h. die Verbesserung ist modenselektiv.

Um dieses Modell zu bestätigen und mit dem Experiment zu vergleichen, analysiert man nur die drei HOMs mit den größten $\gamma_k^{(\mathrm{THG})}$ - Werten, markierten Abb. 3c mit $M_1$bis $M_3$. Die dominanteste HOM ist die $M_1$-Mode bei $n_{M_1}^{\mathrm{eff}} = 1.379$. $\gamma_{M_1}^{(\mathrm{THG})}$ wird durch die $MoS_2$-Beschichtung etwa verdoppelt. Der zweitstärkste Beitrag für den unbeschichteten ECF kommt aus der $M_2$-Mode bei $n_{M_2}^{\mathrm{eff}} = 1.366$, $\gamma_{M_2}^{(\mathrm{THG})}$ erhöht sich nach Anwendung der TMDC-Beschichtung auf das ~2.5-fache. Es wird hier jedoch durch die Mode $M_3$ bei $n_{M_2}^{\mathrm{eff}} = 1.383$ überholt, die ihren $\gamma_{M_3}^{(\mathrm{THG})}$ - Wert fast vervierfacht.

Die modenselektive Verbesserung der Überlappungskoeffizienten spiegelt sich in der räumlichen Verteilung des TH-Lichts wider, wie sie in die in Fig. und e dargestellt sind, die von einer Kamera aufgenommen wurden, fokussiert auf die Endfläche der ECFs.

Der einzelne Peak an der Oberseite der ECF wird durch eine breitere und schwächere dreifache Spitzenverteilung für den $MoS_2$-beschichteten ECF ersetzt. Darüber hinaus ist das Feld weniger lokalisiert und erstreckt sich weiter in die Bodenstrebe für die $MoS_2$-beschichtete ECF. Qualitativ können beide Verteilungen durch eine einfache Überlagerung der $M_1$, $M_2$ und $M_3$-Moden reproduziert werden, wie in Fig. 4f und g, zu sehen ist, wobei die Überlagerungskoeffizienten nach den relativen Werten der Überlappungskoeffizienten $\gamma_{M_{1-3}}^{(\mathrm{THG})}$, mit und ohne $MoS_2$-Beschichtung ausgewählt werden. Sowohl die Modifikation am oberen als auch am unteren Rand des Bildes ist für ein so einfaches Modell bemerkenswert gut reproduziert, insbesondere angesichts der großen Unsicherheiten der linearen und nichtlinearen Koeffizienten von $MoS_2$ und der Auswirkungen der zufälligen Verteilung der Kristalle auf den ECF.

Diese beiden Ausführungsbeispiele zeigen, dass hochwertige, kristalline Monolagen-TMDCs, bspw. $MoS_2$ und $WS_2$, welche direkt auf dem Kern mikrostrukturierter exponierter Kernfasern in einem skalierbaren CVD-Prozess aufgewachsen werden können, eine Funktionalisierung von optischen Fasern bewirkt und damit eine neue Plattform schafft, um die elektrooptischen Eigenschaften von TMDCs zu und zu nutzen. Exzitonische und nichtlineare Funktionalisierung wird in zwei Fallstudien demonstriert. Erstens erregen und sammeln wir die exzitonische Photolumineszenz von Monolagen in der optischen Faser, die den Zugang zu bspw. Remote-Sensing-Schemata ermöglicht und eine neue Plattform zur Untersuchung von exzitonischen Effekten bietet.

Diese beiden Ausführungsbeispiele zeigen auch, dass TMDCs nichtlineare optische Prozesse subtil verändern und verstärken können, was die Untersuchungen der modenselektiven Verstärkung der dritten harmonischen Erzeugung zeigen. Dies kann die Gestaltungsfreiheit für hochgradig nichtlineare geführte Wellensysteme verbessern und kann in nichtlinearen Fasergeräten verwendet werden.

Insgesamt eröffnet das direkte Wachstum von 2D-Materialien auf Wellenleitern zu TMDCs einen neuen Weg zur skalierbaren und reproduzierbaren Funktionalisierung von Wellenleitern, Fasern und anderen integrierten optischen Systemen.

Bezugszeichenliste

| | |
|---|---|
| I - | reaktive Atmosphäre mit Prekursoren zur Abscheidung von TMDCs |
| II - | konvektiver oder erzwungener Transport der Atmosphäre auf die Oberfläche des Wellenleiters oder der Faser |
| III - | konvektiver oder erzwungener Transport der Atmosphäre entlang von Hohlräumen des Wellenleiters oder der Faser |
| IV - | Fasercladding- oder Wellenleitersubstrat |
| V - | äußere Wellenleiteroberfläche |
| VI - | strukturierter, wellenleitender Faserkern mit designten Dispersionseigenschaften |
| VII - | innere Wellenleiteroberfläche |
| VIII - | Reaktorgefäß zur Einstellung atmosphärischer Parameter |
| IX - | eingekoppeltes Licht |
| X - | nichtlinearer Wellenleiter mit TMDC-Beschichtung |
| XI - | ausgekoppeltes, nichtlinear modifiziertes Licht |
| XII - | ausgekoppeltes, nichtlinear generiertes Licht |

**Patentansprüche**

1. Lichtkonversionsanordnung in Form einer optischen Faser mit einem Kern sowie mit oder ohne Hohlräumen, bestehend aus Fasercladding- oder Wellenleitersubstrat (IV) mit einer angepassten Geometrie, welche die Lichtleitungseigenschaften der Fasermode mit designten Dispersionseigenschaften (VI) definiert, **dadurch gekennzeichnet, dass** der Kern eine durch Gas-Phasenabscheidung oder Atomlagenabscheidung vermittels chemischer Dampfabscheidung mit Prekursorgasen direkt aufgewachsene, atomar dünnen Schicht aus Übergangsmetalldichalcogniden in Kristallite-Form trägt, wobei diese Schicht den Kern vollständig oder teilweise bedeckt, die Kristallite stochastisch geordnet sind und sich die Schicht als eine Monolage auf dem wellenleitenden Bereich des Kerns befindet.

2. Anordnung gemäß Anspruch 1, **dadurch gekennzeichnet, dass** der Wellenleiter oder der Kern die Schicht aus Übergangsmetalldichalcogniden über eine Länge von 30 $\mu$m bis wenige Zentimeter trägt.

3. Anordnung gemäß Anspruch 1, oder 2, **dadurch gekennzeichnet, dass** die Übergangsmetalldichalcogenide $MoS_2$, $WS_2$, $MoSe_2$, $MoS_{2(1-x)}Se_{2x}$, $WS_{2(1-x)}Se_{2x}$, $MoS_2WS_2$, $MoSe_2$, $WSe_2$, $MoS_2NbSe_2$, $MoSe2NbSe2$, $MoSSe$ oder $WSSe$ sind.

4. Anordnung gemäß einem oder mehrerer der Ansprüche 1 bis 3, **dadurch gekennzeichnet, dass** die Schicht aus Übergangsmetalldichalcogniden mit einer Abdeckschicht versehen ist.

5. Verfahren zur Herstellung eines optischen Bauteils gemäß einem oder mehrerer der Ansprüche 1 bis 4 bei dem unter reaktiver Atmosphäre mit Prekursorgasen zur Abscheidung von Übergangsmetalldichalcogniden direkt auf der Oberfläche des Wellenleiters oder des Kerns (VI) bei konvektivem oder erzwungenem Transport der Atmosphäre (V; VII) auf die Oberfläche (II) des Wellenleiters oder der Kerns oder der Innenfläche (III) dieser eine mittels chemischer Gasphasenabscheidung oder Atomlagenabscheidung in einem Reaktorgefäß zur Erstellung atmosphärischer Parameter (VIII) eine atomar dünne Schicht aus Übergangsmetalldichalcogniden aufwächst.

6. Verfahren gemäß Anspruch 5, **dadurch gekennzeichnet, dass** nach dem Aufwachsen der Schicht aus Übergangsmetalldichalcogniden eine Nachbehandlung erfolgt, bei welcher eine Modifikation der Übergangsmetalldichalcognide durch Induktion von Fehlstellen mittels Plasma oder durch Ionenstrahlschädigungschädigung erfolgt.

7. Verfahren gemäß Anspruch 5 oder 6, **dadurch gekennzeichnet, dass** eine Funktionalisierung der Schicht aus Übergangsmetalldichalcogniden durch Anreichung vermittels Ankopplung mit selektiv reaktiven Gruppen erfolgt.

8. Verfahren gemäß Anspruch 5 oder 6, **dadurch gekennzeichnet, dass** eine Funktionalisierung der Schicht aus Übergangsmetalldichalcogniden durch deren Passivierung durch Überschichtung mit einer Schutzschicht erfolgt.

9. Verwendung einer Anordnung gemäß einem oder mehrerer der Ansprüche 1 bis 4 zur effizienten nichtlinearen Lichtkonversion.

**Claims**

1. Light conversion device in the form of an optical fibre with a core and with or without cavities, consisting of fibre cladding or waveguide substrate (IV) with an adapted geometry which defines the light guiding properties of the fibre mode with designed dispersion properties (VI), **characterised in that in that** the core carries an atomically thin layer of transition metal dichalcognides in crystallite form grown directly by gas phase deposition or atomic layer deposition by means of chemical vapour deposition with precursor gases, this layer covering the core completely or partially, the crystallites being stochastically ordered and the layer being located as a monolayer on the waveguiding region of the core.

2. Arrangement according to claim 1, **characterised in that** the waveguide or the core carries the layer of transition metal dichalcognides over a length of 30 $\mu$m to a few centimetres.

3. Arrangement according to claim 1, or 2, **characterised in that** the transition metal dichalcogenides are MoS$_2$, WS$_2$, MoSe$_2$, MoS$_{2(1-x)}$Se$_{2x}$, WS$_{2(1-x)}$Se$_{2x}$, MoS$_2$WS$_2$, MoSe$_2$, WSe$_2$, MoS$_2$NbSe$_2$, MoSe$_2$NbSe$_2$, MoSSe or WSSe.

4. Arrangement according to one or more of claims 1 to 3, **characterised in that** the layer of transition metal dichalcognides is provided with a covering layer.

5. Process for the production of an optical component according to one or more of claims 1 to 4, in which under a reactive atmosphere with precursor gases for the deposition of transition metal dichalcognides directly on the surface of the waveguide or the core (VI) with convective or forced transport of the atmosphere (V; VII) onto the surface (II) of the waveguide or the core or the inner surface (III) thereof by means of chemical vapour deposition or atomic layer deposition in a reactor vessel to produce atmospheric parameters (VIII), an atomically thin layer of transition metal dichalcognides grows.

6. Process according to claim 5, **characterised in that**, after the growth of the layer of transition metal dichalcognides, a post-treatment is carried out in which the transition metal dichalcognides are modified by induction of defects by means of plasma or by ion beam damage.

7. Process according to claim 5 or 6, **characterised in that** the layer of transition metal dichalcognides is functionalised by enrichment by means of coupling with selectively reactive groups.

8. Process according to claim 5 or 6, **characterised in that** the layer of transition metal dichalcognides is functionalised by passivating it by coating it with a protective layer.

9. Use of an arrangement according to one or more of claims 1 to 4 for efficient non-linear light conversion.

**Revendications**

1. Dispositif de conversion de lumière sous la forme d'une fibre optique avec un coeur ainsi qu'avec ou sans cavités, constitué d'un substrat (IV) de plaquage de fibre ou de guide d'ondes avec une géométrie adaptée qui définit les propriétés de conduction de lumière du mode de la fibre avec des propriétés de dispersion (VI) conçues, **caractérisé en ce que** le substrat (IV) de plaquage de fibre ou de guide d'ondes est constitué d'une couche d'oxyde d'aluminium, **en ce que** le coeur porte une couche atomiquement mince de dichalcognides de métaux de transition sous forme de cristallites, obtenue par croissance directe par dépôt en phase gazeuse ou par dépôt en couche atomique par dépôt chimique en phase vapeur avec des gaz précurseurs, cette couche recouvrant complètement ou partiellement le coeur, les cristallites étant ordonnées de manière stochastique et la couche se trouvant sous forme de monocouche sur la zone de guidage d'ondes du coeur.

2. Dispositif selon la revendication 1, **caractérisé en ce que** le guide d'ondes ou le noyau porte la couche de dichalcognides de métal de transition sur une longueur de 30 $\mu$m à quelques centimètres.

3. Agencement selon la revendication 1, ou 2, **caractérisé en ce que** les dichalcogénures de métaux de transition sont MoS$_2$, WS$_2$, MoSe$_2$, MoS$_{2(1-x)}$Se$_{2x}$, WS$_{2(1-x)}$Se$_{2x}$, MoS$_2$WS$_2$, MoSe$_2$, WSe$_2$, MoS$_2$NbSe$_2$, MoSe$_2$NbSe$_2$, MoSSe et WSSe.

4. Ensemble selon une ou plusieurs des revendications 1 à 3, **caractérisé en ce que** la couche de dichalcognures de métaux de transition est pourvue d'une couche de recouvrement.

5. Procédé de fabrication d'un composant optique selon l'une ou plusieurs des revendications 1 à 4 dans lequel, sous atmosphère réactive avec des gaz précurseurs pour le dépôt de dichalcognides de métaux de transition directement sur la surface du guide d'onde ou du noyau (VI), avec transport convectif ou forcé de l'atmosphère (V ; VII) sur la surface (II) du guide d'ondes ou du noyau ou sur la surface intérieure (III) de ceux-ci une couche atomiquement mince de dichalcognides de métaux de transition croît au moyen d'un dépôt chimique en phase vapeur ou d'un dépôt de couches atomiques dans une cuve de réacteur pour établir des paramètres atmosphériques (VIII).

6. Procédé selon la revendication 5, **caractérisé en ce qu'**après la croissance de la couche de dichalcogniures de métaux de transition, on effectue un traitement ultérieur au cours duquel on procède à une modification des dichalcogniures de métaux de transition par induction de défauts au moyen de plasma ou par endommagement par faisceau d'ions.

7. Procédé selon la revendication 5 ou 6, **caractérisé en ce qu'**une fonctionnalisation de la couche de dichalcognides de métaux de transition est effectuée par enrichissement au moyen d'un couplage avec des groupes sélectivement réactifs.

8. Procédé selon la revendication 5 ou 6, **caractérisé en ce qu'**une fonctionnalisation de la couche de dichalcognides de métaux de transition est réalisée par sa passivation par superposition d'une couche protectrice.

9. Utilisation d'un dispositif selon une ou plusieurs des revendications 1 à 4 pour une conversion non linéaire efficace de la lumière.

Fig. 1a

Fig. 1b

**(a)**
PL Emission
in Freiraum
in Fasermode
CVD-gewachsene TMD Mono-lagenkristalle
Faser mit exponiertem Kern
Fasermode
Anregelaser (532 nm)

**(b)**
100 μm
Intensität [A.U.]
E'
A$_1$
20.5 cm$^{-1}$
λ=532 nm
360   380   400   420
Ramanverschiebung

**(c)**
CVD Gasfluss
Luft
exponierte Kernoberfläche
SiO$_2$
y
x
1 μm

**(d)**

**(e)**
In Richtung PL-Mikroskop
1
0.8
0.6
0.4
0.2
0
PL-Intensität
20 μm

**Fig. 2**

Fig. 3

EP 4 143 635 B1

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. F. MAK ; C. LEE ; J. HONE ; J. SHAN ; T. F. HEINZ.** Atomically Thin mos2: A New Direct-Gap Semiconductor. *Phys. Rev. Lett.,* 2010, vol. 105, 136805
- **Y.-W. SONG ; S.-Y. JANG ; W.-S. HAN ; M.-K. BAE.** Graphene mode-lockers for fiber lasers functioned with evanescent field interaction. *Applied Physics Letters,* 2010, vol. 96, 051122
- **A. GEORGE ; C. NEUMANN ; D. KAISER ; R. MUPPARAPU ; T. LENERT ; U. HUEBNER ; Z. TANG ; A. WINTER ; U. KAISER ; I. STAUDE.** Controlled growth of transition metal dichalcogenide monolayers using knudsen-type effusion cells for the precursors. *Journal of Physics: Materials,* 2018
- **L. K. TAN ; B. LIU ; J. H. TENG ; S. GUO ; H. Y. LOW ; K. P. LOH.** Atomic layer deposition of a mos2 film. *Nanoscale,* 2014, vol. 6, 10584-10588
- **GEORGE, C. ; NEUMANN, D. ; KAISER, R. ; MUPPARAPU, T. ; LENERT, U. ; HUEBNER, Z. ; TANG, A. ; WINTER, U. ; KAISER, I. ; STAUDE A.** Turchanin, Controlled growth of transition metal dichalcogenide monolayers using knudsen-type effusion cells for the precursors. *Journal of Physics: Materials,* 2018
- **L. K. TAN ; B. LIU ; J. H. TENG ; S. GUO ; H. Y. LOW ; K. P. LOH.** Atomic layer deposition of a MoS2 film. *Nanoscale,* 2014, vol. 6, 10584-10588
- Composite material hollow core fibers: functionalisation with silicon and 2D materials. **LEWIS A et al.** PROCEEDINGS OF SPIE. SPIE, 23. Februar 2018, vol. 10524, 105350N-105350N
- Enhancing the nonlinear functionality of step-index silica fibers through the combination of thermal poling and 2D materials. **DE LUCIA F et al.** SPIE PROCEEDINGS. SPIE, 18. Februar 2020, vol. 11282, 1128212-1128212
- **A. V. HUSAKOU ; J. HERRMANN.** Supercontinuum Generation of Higher-Order Solitons by Fission in Photonic Crystal Fibers. *Phys. Rev. Lett.,* 2001, vol. 87, 203901
- **V. KARPMAN.** Selfmodulation of nonlinear plane waves in dispersive media. *J. Exp. Theor. Phys,* 1967, vol. 6, 277
- **J. M. HICKMANN ; A. GOMES.** Dynamics of femtosecond soliton-effect optical compression in monomode fibers. *Opt. Commun.,* 1993, vol. 97, 333-336
- **R. SALEM ; M. A. FOSTER ; A. C. TURNER ; D. F. GERAGHTY ; M. LIPSON ; A. L. GAETA.** Optical time lens based on four-wave mixing on a silicon chip. *Opt. Lett.,* 2008, vol. 33, 1047-1049
- **H. FUKUDA ; K. YAMADA ; T. SHOJI ; M. TAKAHASHI ; T. TSUCHIZAWA ; T. WATANABE ; J. ICHI TAKAHASHI ; S. ICHI ITABASHI.** Four-wave mixing in silicon wire waveguides. *Opt. Express,* 2005, vol. 13, 4629-4637
- **A. EFIMOV ; A. J. TAYLOR ; F. G. OMENETTO ; J. C. KNIGHT ; W. J. WADSWORTH ; P. S. J. RUSSELL.** Phase-matched third harmonic generation in microstructured fibers. *Opt. Express,* 2003, vol. 11, 2567-2576
- **R. W. BOYD.** Nonlinear optics. Academic press, 2003